(19) Europäisches Patentamt
European Patent Office
Office européen des brevets

(11) **EP 2 516 113 B1**

(12) **FASCICULE DE BREVET EUROPEEN**

(45) Date de publication et mention de la délivrance du brevet:
**12.12.2018 Bulletin 2018/50**

(21) Numéro de dépôt: **10816326.2**

(22) Date de dépôt: **23.12.2010**

(51) Int Cl.:
***B24D 15/00*** *(2006.01)*

(86) Numéro de dépôt international:
**PCT/IB2010/056046**

(87) Numéro de publication internationale:
**WO 2011/077403 (30.06.2011 Gazette 2011/26)**

(54) **PROCÉDÉ DE FABRICATION D'UNE FEUILLE PAR DENSIFICATION POUR FORMER UNE ZONE RENDUE TRANSPARENTE**

VERFAHREN ZUR HERSTELLUNG EINES BLATTES DURCH KOMPRÄGNIERUNG ZUR HERSTELLUNG EINES TRANSPARENTEN BEREICHS

METHOD FOR MANUFACTURING A SHEET BY MEANS OF COMPREGNATION IN ORDER TO FORM AN AREA MADE TRANSPARENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2009 FR 0959474**

(43) Date de publication de la demande:
**31.10.2012 Bulletin 2012/44**

(73) Titulaire: **Oberthur Fiduciaire SAS 75008 Paris (FR)**

(72) Inventeurs:
• **PRIQUE, Eric**
  **F-77169 Chauffry (FR)**
• **THIERRY, Ivan**
  **F-77320 Jouy Sur Morin (FR)**
• **DIETEMANN, Philippe**
  **F-38500 Saint Martin d'Hères (FR)**

(74) Mandataire: **Nony**
  **11 rue Saint-Georges**
  **75009 Paris (FR)**

(56) Documents cités:
**WO-A1-2008/116796    CA-A1- 2 505 586**
**FR-A1- 2 925 864     GB-A- 2 338 680**
**US-A- 5 536 468**

## Description

La présente invention concerne les feuilles de sécurité, et plus particulièrement celles réalisées à partir d'au moins un matériau polymère.

## Arrière-plan

On connaît de manière générale des documents de sécurité et/ou de valeur comportant des éléments de sécurité permettant de protéger ces documents contre des tentatives de falsification ou de contrefaçon.

Parmi les éléments de sécurité, certains sont détectables à l'oeil nu, en lumière visible, sans utilisation d'un appareil particulier. Ces éléments de sécurité comportent par exemple des fibres ou planchettes colorées.

Ces éléments de sécurité sont dits de premier niveau.

D'autres types d'éléments de sécurité sont détectables seulement à l'aide d'un appareil relativement simple tel qu'une lampe émettant dans l'ultraviolet ou l'infrarouge. Ces éléments de sécurité comportent par exemple des fibres, des planchettes ou des particules. Ces éléments de sécurité peuvent être visibles à l'oeil nu ou non, étant par exemple luminescents sous une lampe de Wood émettant à une longueur d'onde de 365 nm. Ces éléments peuvent encore être par exemple du type thermochromique ou photochromique.

Ces éléments de sécurité sont dits de deuxième niveau.

D'autres types d'éléments de sécurité encore nécessitent pour leur détection un appareil de détection plus sophistiqué. Ces éléments de sécurité sont par exemple capables de générer un signal spécifique lorsqu'ils sont soumis, de manière simultanée ou non, à une ou plusieurs sources d'excitation extérieures. La détection automatique du signal permet d'authentifier, le cas échéant, le document.

Ces éléments de sécurité comportent par exemple des traceurs se présentant sous la forme de matière active, de particules ou de fibres, capables de générer un signal spécifique lorsque ces traceurs sont soumis à une excitation opto-électronique, électrique, magnétique ou électromagnétique.

Ces éléments de sécurité sont dits de troisième niveau.

Il est connu d'utiliser des matières plastiques pour la fabrication de ces documents de sécurité, par exemple des billets de banque. Comparés aux documents papier, les documents en matière plastique ont l'avantage de présenter une meilleure durabilité, grâce notamment à leur faible porosité, à leur résistance à l'humidité, aux graisses ou aux autres agents pouvant accélérer le vieillissement des documents en papier.

La demande GB 2 338 680 décrit par exemple un substrat pour un document de sécurité comportant un film polymérique transparent orienté bi-axialement, un film polymérique relativement opaque comportant des vides et une couche adhésive, entre les films polymériques, au recto et au verso de laquelle figure des métallisations.

La demande WO 2008/116796 décrit un documents de sécurité comportant une pluralité de film polymériques, au moins un des films polymériques étant non transparent, étiré axialement et comportant des vides, avec un motif transparent permanent.

Pour lutter contre la contrefaçon des billets de banque par photocopie recto/verso ou utilisant un scanner et une imprimante, on peut réaliser, par un repérage adéquat dans une zone donnée, des motifs au recto et des motifs au verso du billet de manière à ce que ces motifs se complètent en lumière transmise pour former une image ou représentation finale, par exemple un ensemble de lignes graphiques ou des caractères alphanumériques ou une image d'un personnage ou d'un animal, etc. Lorsqu'on observe le billet en lumière réfléchie, on ne voit que le motif réalisé sur la face observée alors que, lorsqu'on observe le billet en lumière transmise, on voit tous les motifs qui se complètent donc la représentation finale. Cet effet est désigné par le vocable anglais « see through » ou encore « print through » dans le cas d'impressions. Selon une variante, on peut réaliser en coïncidence des motifs identiques au recto et au verso de manière à observer en lumière transmise une image qui est identique aux motifs qui se superposent. Ces motifs sont par exemple réalisés par des impressions d'aplats de couleur ou par des impressions de traits ou lignes ou d'autres formes.

Il est connu d'utiliser des filigranes qui permettent d'authentifier un document par observation en lumière transmise et qui de plus, protègent de la copie par des moyens optiques tels que la photocopie, la photographie ou la numérisation, le support de la copie ne comportant pas de filigrane intégré.

Il est aussi connu d'utiliser des pseudos filigranes qui reproduisent l'apparence d'un filigrane en présentant des différences d'opacité, et qui peuvent par exemple être obtenus mécaniquement par apport de pression avec ou sans apport de chaleur et/ou chimiquement par application d'une composition, par exemple en augmentant localement la transparence du support sur lequel on réalise le pseudo filigrane grâce à des substances transparentisantes.

La demande US 2007/0026204 décrit un procédé de réalisation d'un pseudo filigrane par embossage sur une matière plastique du type TESLIN®, sur laquelle sont laminées différentes couches en matière plastique pour former une carte. L'utilisation du TESLIN® présente cependant des inconvénients du fait notamment que ce matériau ne possède pas les propriétés appropriées pour la réalisation d'un pseudo filigrane ayant une définition optimale.

La demande US 2007/0178295 décrit un substrat de sécurité comportant une couche de polypropylène sur laquelle peuvent être réalisés des embossages pour former des éléments de sécurité.

La demande EP 0 655 316 et le document US5536468 décrivent un procédé de réalisation d'un filigrane sur une feuille en matériau polymère, dans lequel la feuille est amenée entre des rouleaux pourvus de motifs en relief ou en creux permettant de former un marquage sur la feuille avant que celle-ci ne soit étirée, de manière à ce que le marquage présente des régions claires et sombres par observation en lumière transmise. Ce procédé présente plusieurs inconvénients, du fait notamment que le marquage étant réalisé avant l'étape d'étirage, il n'est pas possible d'obtenir la précision et la définition souhaitées au niveau du filigrane. De plus, l'étape d'étirage conduit fréquemment à une déformation du filigrane et le motif du filigrane ainsi obtenu n'est généralement pas reproductible. CA 2505586 décrit un procédé de fabrication d'une feuille polymérique filigranée par irradiation laser puis étirement. L'opacité peut être ajusté en jouant sur le recouvrement et/ou la puissance surfacique des impulsions laser.

## Résumé

Il existe un besoin pour remédier au moins à certains des inconvénients mentionnés ci-dessus, notamment pour bénéficier d'une nouvelle sécurité contre les falsifications ou contrefaçons pour les feuilles et documents de sécurité réalisés au moins partiellement en matière plastique, qui soit facilement observable à l'oeil nu tout en présentant un niveau de sécurisation suffisant.

Il y a également un intérêt à disposer d'un matériau polymère présentant des propriétés adaptées à la réalisation d'un tel élément de sécurité, notamment à la réalisation d'un pseudo filigrane. En particulier, il existe un besoin pour bénéficier d'un matériau polymère présentant des propriétés améliorées, notamment en termes de compressibilité, permettant de créer localement des densifications et des zones de moindre opacité.

Il serait aussi utile de bénéficier d'un procédé permettant de rendre transparente une ou plusieurs zones d'un matériau polymère permettant l'application d'éléments de sécurité de part et d'autre du matériau.

Il existe encore un besoin pour diversifier les feuilles de sécurité pour produire de nouveaux effets sur le plan esthétique et/ou obtenir une sécurité accrue.

L'invention vise à répondre à tout ou partie de ces besoins, et a pour objet un procédé selon la revendication 1.

Le brevet décrit, selon l'un de ses aspects, un procédé de fabrication d'une feuille comportant un support, notamment au moins partiellement opaque et/ou translucide, réalisé à partir d'au moins un matériau polymère, comportant les étapes successives consistant à :

a) densifier au moins une zone du support, notamment par compression du support, de manière à former au moins une zone rendue transparente,
b) munir le support d'au moins deux éléments de sécurité respectivement au recto et au verso du support, lesdits au moins deux éléments de sécurité étant superposés chacun au moins partiellement à ladite au moins une zone rendue transparente et étant placés de manière repérée l'un par rapport à l'autre.

Il faut donner un sens large à l'expression «zone rendue transparente », cette expression désignant une zone devenue transparente ou translucide par densification. En effet, la densification d'un support translucide peut permettre d'obtenir une zone transparente ou une zone toujours translucide mais plus transparente que le support. De même, la densification d'un support opaque peut permettre d'obtenir une zone transparente ou une zone translucide. Autrement dit, la densification permet de faire varier l'opacité de la zone et en particulier de réduire l'opacité de la zone. En particulier, l'opacité du support peut être réduite par densification de 5 %, de préférence de 10 % et plus préférentiellement de 40 %, la réduction d'opacité étant la différence des opacités mesurées selon la norme ISO 2471 respectivement sur le support avant densification et sur la zone rendue transparente (donc après densification).

Le support peut être opaque ou translucide. Son opacité mesurée selon la norme ISO 2471 est notamment comprise entre 100 % (support opaque) et 40 %. Le support peut en variante comporter une ou plusieurs zones opaques et une ou plusieurs zones translucides.

La densification du support permet de réduire son épaisseur et de passer d'un état translucide à un état plus transparent, diffusant moins la lumière.

Grâce à l'invention, il est possible de réaliser une zone rendue transparente sur un support, notamment par compression de celui-ci, et permettre l'application d'éléments de sécurité de manière à faire apparaître par exemple un effet « see through » dans le but d'authentifier la feuille de sécurité.

L'invention permet de réaliser une zone rendue transparente à partir d'un matériau polymère présentant une couche, notamment une couche de coeur, suffisamment poreuse pour conférer au matériau une compressibilité rendant possible la densification locale du support, et également la création de zones de moindre opacité. De la sorte, il est possible d'obtenir une zone rendue transparente présentant les propriétés souhaitées, notamment en termes de définition, de précision et de reproductibilité.

Le support est un support coextrudé, réalisé à partir d'au moins un matériau polymère comportant une couche de coeur et au moins une couche de peau, la couche de coeur comportant des vides. Dans ce cas, le procédé peut comporter avant l'étape a), l'étape consistant à étirer le support, notamment biaxialement.

Par « couche de coeur », encore appelée « couche de base », il faut comprendre que cette couche du support est plus éloignée de la surface de la feuille que la « couche de peau », encore appelée « couche de surface ». La couche de peau peut définir ou non une face extérieure de la feuille, le support pouvant être recouvert au moins partiellement par un revêtement destiné à accroître la tenue de la zone rendue transparente, par exemple.

La densification correspond à une compression du support.

La compression du support permet de rendre transparente une ou plusieurs zones du support, et permettre l'apparition d'un effet filigrané multiton, notamment sous la forme d'une image en niveaux de gris.

La compression du support est notamment facilitée, dans le cas où le support est coextrudé, par la présence des vides de la couche de coeur, l'application d'une pression lors de la compression permettant notamment de diminuer le taux de ces vides et ainsi d'augmenter la transparence du support.

La zone rendue transparente est avantageusement entièrement située entre les plans définis respectivement par les faces recto et verso du support avant densification. La zone rendue transparente peut être ou non délimitée, au moins d'un côté par une des faces du support. L'une des faces de la zone rendue transparente peut être située dans un plan défini par l'une des faces du support avant densification. Au moins l'une des faces de la zone rendue transparente peut être située en retrait par rapport à la face du support située du même côté, avant densification. La distance qui sépare les deux faces de la zone rendue transparente peut être inférieure ou égale à la distance qui sépare les deux faces du support avant densification.

Le support peut être non couché après densification ou être couché avant densification. De la sorte, il est possible de conserver un rendu optimal de la zone rendue transparente, le couchage du support après densification engendrant une perte des variations de transparence obtenues par densification.

Par « couchage », il faut comprendre le dépôt d'un revêtement à l'état fluide sur le support, de façon uniforme, par exemple un revêtement tel que défini plus loin.

Le support peut être partiellement couché, avant ou après densification. Autrement dit, le revêtement peut n'être déposé que partiellement sur le support.

En particulier, le support peut être couché sur la totalité d'au moins l'une de ses faces sauf sur au moins une partie de la zone rendue transparente. Une telle partie non couchée peut ainsi permettre de visualiser l'effet de la densification sur le support. En particulier, la densification permet à la zone rendue transparente d'apparaître plus foncée que le reste du support, notamment du fait d'une concentration en particules, tels que des pigments, plus élevée car l'épaisseur du support est plus faible dans cette zone.

Le support peut être coloré et/ou comporter un agent luminescent. L'agent luminescent peut être observable sous un rayonnement ultraviolet (UV) et/ou infrarouge (IR). De la sorte, il est possible d'obtenir des dégradés de couleur accentuant les variations de transparence de la zone rendue transparente. Dans le cas d'un support coextrudé comme défini ci-dessus, la couche de coeur sera de préférence colorée et/ou comportera un agent luminescent. En effet, la couche de coeur étant compressible du fait de la présence des vides, elle peut permettre d'obtenir un meilleur rendu des nuances de couleur sur la zone rendue transparente.

La Demanderesse a mis en évidence que la mauvaise qualité des pseudo filigranes réalisés sur les supports en matière plastique utilisés jusqu'à présent provenait notamment d'un manque de compressibilité des supports. Or, un support coextrudé tel que défini ci-dessus présente l'avantage d'être facilement compressible du fait de la présence de vides dans la couche de coeur. Il est, de ce fait, adaptée à la réalisation de pseudo filigranes et à tout autre traitement générant un effet tactile. Le support peut présenter des pseudo filigranes équivalents à ceux obtenus sur une feuille en papier et une grande netteté des détails.

Un autre avantage d'un tel support est qu'il permet un excellent rendu du pseudo filigrane ainsi qu'un bon contraste, ce qui permet d'y faire figurer de façon nette des structures fines, difficiles à reproduire par les contrefacteurs.

La densification, par compression, du support peut être réalisée à différents degrés de manière à obtenir différents niveaux de transparence sur la zone rendue transparente. On peut par exemple densifier une partie du support selon un motif, une impression étant par exemple sous-jacente à ladite partie du support, à un degré plus élevé qu'autour de cette partie du support. Cela peut par exemple permettre d'obtenir un motif complémentaire à une impression (par exemple du type « see-through ») ou mettant en relief une impression.

Le procédé peut en outre comporter une étape supplémentaire consistant à réaliser une densification dans une zone non superposée aux éléments de sécurité précités, par exemple par embossage du support.

La zone rendue transparente peut correspondre à un pseudo filigrane réalisé sur le support. Par « pseudo filigrane », on entend une image qui apparait dans l'épaisseur de la feuille, notamment dans l'épaisseur d'une ou de plusieurs couches du support. L'image peut apparaître en transvision notamment.

Afin de réaliser la zone rendue transparente sur le support, on utilise un ou plusieurs motifs en relief, ce ou ces motifs étant présents par exemple sur un ou plusieurs rouleaux, et réalise une compression du support à l'aide du ou des motifs en amenant le support au contact du ou des reliefs, par exemple en faisant défiler le support au contact du ou des rouleaux. La formation du ou des motifs, par exemple par gravure sur un ou plusieurs rouleaux, peut être réalisée de manière à faire apparaitre des niveaux de densification variés après compression.

La densification du support peut être obtenue par compression, notamment une compression dans laquelle le support est comprimé entre une première forme comportant un premier motif saillant et une deuxième forme comportant un deuxième motif saillant ou en variante étant sans motif. Les premier et deuxième motifs peuvent être identiques ou différents. Les premier et deuxième motifs peuvent représenter au moins une partie d'un pseudo filigrane.

Au moins l'un des premier et deuxième motifs a des reliefs de hauteur variable, dans le but par exemple de former un pseudo filigrane à effet multiton, comme indiqué plus haut.

Le premier motif peut avoir des reliefs de même hauteur ou de hauteur variable par rapport aux reliefs du deuxième motif.

Les hauteurs des reliefs sont par exemple choisies parmi un ensemble de valeurs discrètes, par exemple au moins trois valeurs. En variante, les reliefs peuvent avoir une hauteur qui varie continûment.

Les caractéristiques de la zone rendue transparente, notamment du pseudo filigrane, obtenue, notamment en termes de définition, de précision et de reproductibilité, peuvent dépendre de la température et de la pression, le choix de la pression pouvant se faire en fonction de la température.

La densification du support peut permettre de créer différents niveaux de transparence sur le support, notamment par un choix approprié du couple température/pression.

La densification du support peut être réalisée à chaud ou à froid. De préférence, la densification est réalisée à chaud. La température utilisée lors de la densification peut par exemple être comprise entre 60 et 80°C.

La température peut être inférieure et proche de la température de fusion du support ou de l'un de ses constituants. L'homme du métier choisira de préférence une température inférieure à ladite température de fusion, ni trop éloignée pour permettre une compression plus facile du support, ni trop proche de manière à ce que le matériau ne soit pas collant, ceci afin d'éviter toute difficulté de mise en oeuvre. En particulier, en présence d'un support réalisé au moins partiellement en polyéthylène, la température peut être inférieure et proche de la température du polyéthylène (PE). De la sorte il est possible de faciliter la densification, voire la déformation, du support. Par « proche », on désigne par exemple une valeur comprise entre 40 et 70% de la température de fusion du support.

La pression appliquée lors de la densification peut être choisie en fonction du degré de transparentisation souhaitée. En particulier, plus la pression est élevée, plus la densification crée de la transparence. La pression peut par exemple être comprise entre 150 et 300 bar.

La durée pendant laquelle une compression est appliquée peut être variable. La durée peut par exemple être inférieure ou égale à 5 secondes.

On peut adapter la température, la pression et/ou la durée afin notamment d'obtenir un rendu optimal des éléments de sécurité au recto et au verso du support, notamment sous forme d'impressions complémentaires, et/ou un contraste optimal par rapport à la zone comprimée du support, tout en veillant à ne pas fragiliser le support.

Pour élever la température, on peut chauffer le support et/ou les formes utilisées, par exemple le ou les rouleaux pourvus du relief.

La première et/ou la deuxième forme peuvent par exemple être réalisées à partir d'un papier buvard, épais ou non, un carton stratifié, dur ou non, une pièce de bakélite, une pièce métallique, du caoutchouc, un polymère, par exemple du polyuréthane, entre autres.

La densification peut permettre d'obtenir une définition proche de celle souhaitée pour un pseudo filigrane. En particulier, la densification selon l'invention peut permettre d'obtenir des points densifiés isolés de plus grande dimension inférieure à 200 $\mu$m, par exemple inférieure ou égale à 50 $\mu$m.

Le support peut être réalisé en un ou plusieurs matériaux, choisis parmi :

  1) les résines polymérisées par addition telles que :

    a) les résines polyoléfiniques, pouvant avoir des densités variables et des degrés variables de ramification telles que par exemple le polyéthylène, le polypropylène, le polyméthylpentène, et leurs mélanges,
    b) les résines élastomères telles que par exemple les éthylène-propylène-diène-monomères, le poly(acrylonitrile-butadiène-styrène), le poly(styrène-butadiène-styrène), le polybutadiène, le polyisoprène, et leurs mélanges,
    c) les résines vinyliques telles que par exemple le poly(chlorure de vinyle), le poly(acétate de vinyle), le poly(éthylène-acétate de vinyle), le poly(éthylène-alcool vinylique), et leurs mélanges,
    d) les résines halogénées telles que par exemple le poly(chlorure de vinyle), le polychloroprène, le poly(chlorure de vinylidène), le polytétrafluoroéthylène, et leurs mélanges,
    e) les résines styréniques telles que par exemple le polystyrène, le poly(styrène-acrylonitrile), le poly(styrène-butadiène-styrène), et leurs mélanges,
    f) les résines acryliques telles que par exemple, le poly(méthacrylate de méthyle), le polyacrylonitrile, le poly(acrylonitrile-butadiène-styrène), le poly(éthylène-acrylate de méthyle), et leurs mélanges,
    g) les résines ionomères,

  2) les résines polymérisées par condensation telles que :

    a) les résines polyesters telles que par exemple le poly(éthylène téréphtalate), le poly(butylène téréphtalate), le poly(téréphtalate d'éthylène glycol), les glycérophtaliques, et leurs mélanges,

b) les résines polyamides,

c) les résines polycarbonates,

d) les résines polyuréthanes,

e) les résines polyimides,

f) les résines polyacétals, telles que par exemple le polyvinylbutyral,

g) les résines polyéthers, telles que par exemple le polyoxyméthylène,

h) les résines époxydes,

i) les résines aminoplastes,

j) les résines phénoplastes,

k) les résines silicones,

3) les résines dérivées de la cellulose naturelle telles que :

a) l'acétate de cellulose (encore appelé viscose).

L'invention concerne également un article, notamment un document de sécurité et/ou de valeur ou un dispositif de conditionnement, comportant une feuille obtenue par le procédé tel que défini ci-dessus.

En particulier, l'article peut être choisi parmi : un document d'identité, un moyen de paiement tel qu'un chèque ou un billet de banque, une carte d'identité, une feuille ou un livret de passeport, un visa, un coupon, une étiquette de protection et/ou d'authentification, une étiquette de traçabilité, un papier tête de lettre ou à visée publicitaire, entre autres.

La zone du support peut être densifiée selon une trame.

Il faut donner à l'expression « trame », au sens de la présente invention, un sens large qui couvre tous les types de trames ou pseudo-trames, comportant notamment une juxtaposition de zones claires et de zones sombres, distinguables les unes des autres, la forme de ces zones claires et de ces zones sombres n'étant pas limitée à une forme particulière mais pouvant être quelconque.

On désigne dans la présente invention par les expressions « zones claires » et « zones sombres » des zones telles que l'opacité des « zones claires » est inférieure à l'opacité des « zones sombres », l'opacité étant mesurée selon la norme ISO 2471, comme décrit précédemment.

Par exemple, la trame peut comporter un ensemble d'éléments de trame, par exemple des points de trame et/ou des lignes de trame, parallèles ou non. La taille, la densité des éléments de trame et/ou l'espacement entre les éléments de trame peuvent être variables ou constants. La trame peut former une succession de zones claires et sombres, par exemple blanches et noires.

Un élément de trame peut représenter un symbole, un caractère alphanumérique, un texte, un idéogramme, un objet, entre autres.

La trame peut être à modulation d'amplitude. Par modulation d'amplitude, il faut comprendre que les zones claires sont plus ou moins grandes selon la densité optique à reproduire. La trame peut comporter des lignes de trame avec une linéature constante, comprise par exemple entre 5 et 20 l/cm.

La trame peut être à modulation de fréquence. Par modulation de fréquence, il faut comprendre que les zones claires sont plus ou moins nombreuses selon la densité optique à reproduire.

L'invention pourra être mieux comprise à la lecture de la description qui va suivre, d'exemples de mise en oeuvre non limitatifs de celle-ci, et à l'examen des figures du dessin annexé, schématiques et partielles, sur lequel :

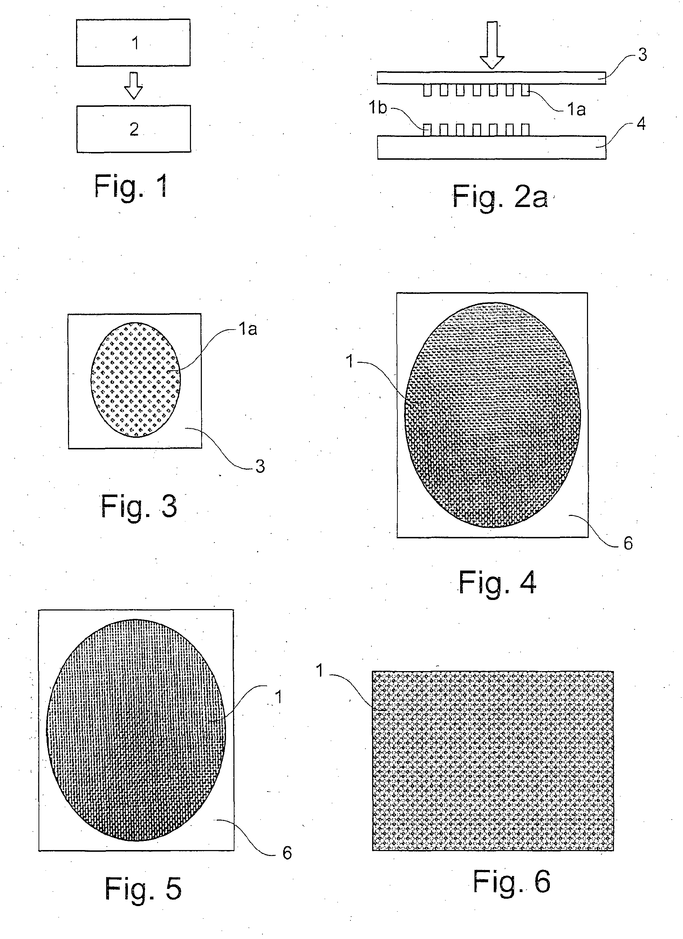

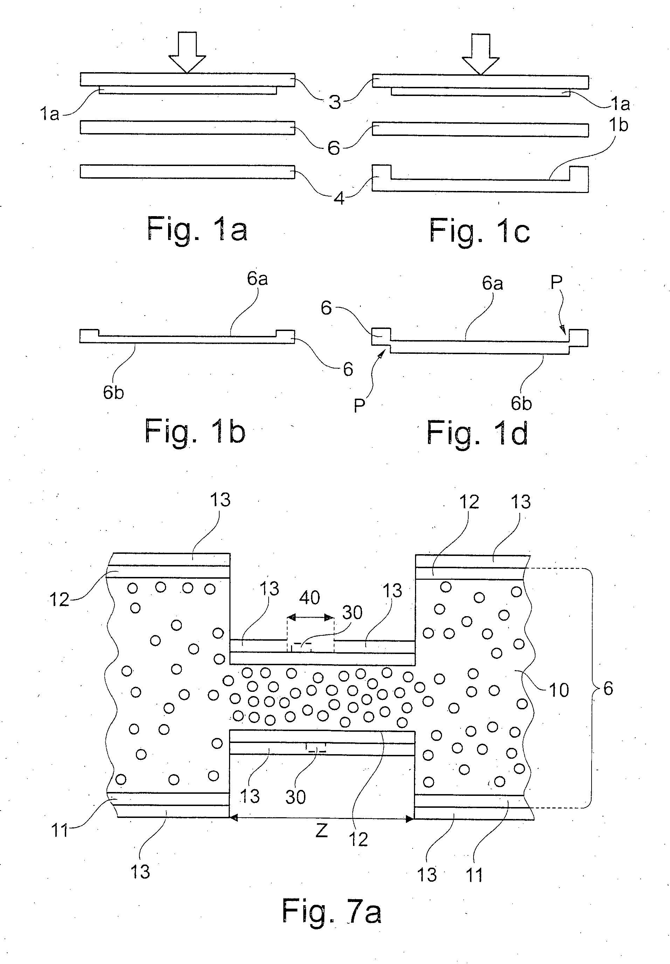

- les figures 1a et 1b illustrent un procédé de densification d'un support par compression,

- les figures 1c et 1d illustrent un procédé de densification d'un support par embossage,

- la figure 1 illustre des étapes d'un procédé de fabrication selon l'invention,

- les figures 2a à 2f représentent, en coupe, des exemples de première et deuxième formes permettant la réalisation d'un pseudo filigrane sur un support selon l'invention, les figures 2a et 2b étant non couvertes par les revendications,

- la figure 3 représente, en vue de face, un exemple de motif pour former un pseudo filigrane sur un support selon l'invention,

- les figures 4 et 5 représentent, en vue de face, l'observation du pseudo filigrane dont le motif est représenté sur la figure 3, respectivement en lumière réfléchie et en lumière transmise,

- la figure 6 représente, en vue de face, un détail du pseudo filigrane de la figure 5,

- la figure 7 représente, en coupe, un exemple de feuille selon l'invention,

- la figure 7a représente, en coupe, un autre exemple de feuille selon l'invention,

- la figure 8 représente, en vue de face, un autre exemple de support comportant un pseudo filigrane réalisé selon l'invention,

- la figure 9 est une vue en coupe de la figure 8,

- les figures 10 à 12 représentent des exemples de feuilles de sécurité réalisées selon l'invention,

- les figures 13 et 14 représentent respectivement des vues de face du recto et du verso de la feuille de sécurité de la figure 12,

- la figure 15 représente, en vue de face, l'observation en lumière transmise de la feuille de sécurité de la figure 12, et

- les figures 16 et 17 représentent, en coupe, d'autres exemples de feuille selon l'invention incorporant des particules de marquage.

Sur les figures, les éléments n'ont pas toujours été représentés avec un respect des proportions réelles, dans un souci de clarté du dessin.

Les figures 1a et 1b illustrent un procédé de densification d'un support 6 par compression.

Comme illustré à la figure 1a, le support 6 est placé entre une première forme 3 comportant un motif en relief 1a et une deuxième forme 4 comportant une surface plane.

La densification du support 6 permet alors d'obtenir un support densifié 6 comportant une première face 6a présentant un motif en creux correspondant au motif en relief 1a de la première forme 3, et une deuxième face 6b plane, comme on peut le voir sur la figure 1b.

Les figures 1c et 1d illustrent un procédé de densification d'un support 6 par embossage.

Comme illustré à la figure 1c, le support est placé entre une première forme 3 comportant un motif en relief 1a et une deuxième forme 4 comportant un motif en creux 1b.

La densification du support 6 permet alors d'obtenir un support densifié 6 comportant une première face 6a présentant un motif en creux correspondant au motif en relief 1a de la première forme 3, et une deuxième face 6b présentant un motif en relief correspondant au motif en creux 1b de la deuxième forme 4. Par ailleurs, des zones de moindre épaisseur P sont formées sur le support 6, appelées également « zones de pincement ».

L'invention a trait, dans des exemples de mise en oeuvre, au traitement d'un support coextrudé, réalisé à partir d'au moins un polymère comportant une couche de coeur et au moins une couche de peau, la couche de coeur comportant des vides, en vue de réaliser une zone de transparence accrue.

Comme illustré à la figure 1, dans une première étape 1, le support peut être étiré, de préférence biaxialement.

Puis dans une seconde étape 2, on réalise une compression, de préférence à chaud du support.

La compression peut être réalisée avec des première et deuxième formes, la première forme comportant un premier motif en relief et la deuxième forme comportant un deuxième motif en relief, les motifs étant représentatifs du pseudo filigrane à réaliser.

On a représenté sur la figure 2a, en coupe, un exemple de première 3 et deuxième 4 formes.

La première forme 3 peut comporter un premier motif en relief 1a dont la disposition correspond au pseudo filigrane 1 que l'on souhaite faire figurer sur le support coextrudé, et la deuxième forme 4 comporte un deuxième motif 1b dont la disposition correspond également à ce pseudo filigrane 1.

La compression est effectuée en plaçant le support entre la première forme 3 et la deuxième forme 4. La dureté des première et deuxième formes 3 et 4 peut être choisie en fonction de l'effet tactile et/ou du contraste que l'on souhaite obtenir.

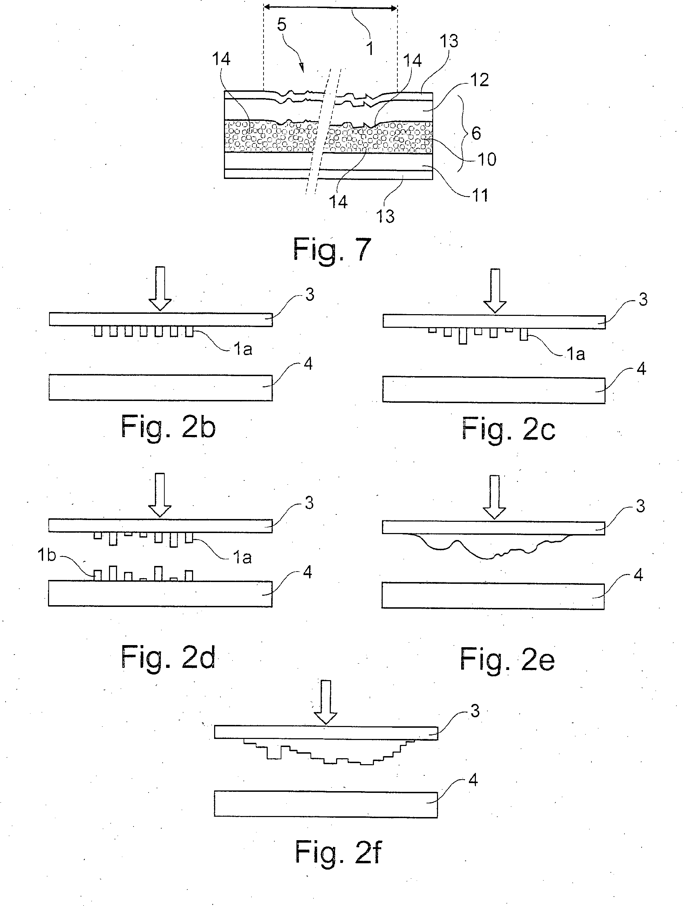

Dans les exemples des figures 2b et 2c, seule la première forme 3 comporte un premier motif en relief 1a, la deuxième forme 4 étant dépourvue de relief.

La hauteur des reliefs du premier motif 1a peut être constante, comme représenté sur la figure 2b, ou variable, comme représenté sur la figure 2c. Une différence de hauteur au niveau des reliefs de la première forme 3 permet l'obtention de filigranes multitons avec différents niveaux de transparence. Plus la hauteur d'un relief sera élevée, plus la transparence engendrée sur le support sera grande.

Dans l'exemple de réalisation de la figure 2d, les première 3 et deuxième 4 formes comportent chacune des premier 1a et deuxième 1b motifs en relief, la hauteur des reliefs étant variable. Les hauteurs des motifs peuvent être des valeurs discrètes choisies, par exemple entre 2 et 10 valeurs de hauteur. La disposition des reliefs peut correspondre à des points de trame d'une image tramée.

Les figures 2e et 2f représentent des variantes de réalisation d'une première forme 3 comportant un premier motif 1a en relief avec un unique relief dont la hauteur varie continûment. La deuxième forme 4 pourrait également présenter un deuxième motif 1b pourvu d'un relief semblable.

On a représenté sur la figure 3, en vue de face, le dessin défini par les reliefs de la première forme 3 de la figure 2. Le dessin correspondant à la deuxième forme 4, non représenté, peut être identique. Comme on le voit sur la figure 3, le support peut ainsi être densifié selon une trame, comportant par exemple des points de trame.

On a représenté sur la figure 4, en vue de face sous lumière réfléchie, le pseudo filigrane 1 réalisé à partir des première et deuxième formes 3 et 4 de la figure 2.

On a représenté sur la figure 5, en vue de face sous lumière transmise, le pseudo filigrane 1 obtenu à partir des première et deuxième formes 3 et 4 de la figure 2.

On peut constater à la fois sur les figures 4 et 5, que la précision et le contraste du pseudo filigrane 1 permettent de distinguer nettement le dessin formé par le pseudo filigrane 1.

Une densification par compression opérée comme décrit ci-dessus peut faciliter l'obtention d'une transparence relativement élevée sur toute l'étendue du pseudo filigrane, à la différence d'un embossage qui faciliterait l'obtention d'une transparence plus élevée essentiellement au niveau des bords du pseudo filigrane.

Par ailleurs, une densification par compression opérée comme décrit ci-dessus peut permettre l'obtention d'une transparence relativement élevée sur toute l'étendue du pseudo filigrane, tout en conservant une meilleure résistance mécanique dans la zone du pseudo filigrane que si la compression avait était uniforme sur toute la zone du pseudo filigrane. En effet, le relief de la figure 2a par exemple peut permettre de conserver des zones non comprimées (entre les reliefs) qui conservent leur épaisseur.

Dans des exemples de mise en oeuvre, la densification est réalisée à l'aide d'une presse à plateau, par exemple de marque Titan®.

La feuille utilisée est par exemple du POLYART® P3, ayant un grammage de 90 g/m$^2$ par exemple.

La feuille utilisée peut encore être du PEPPART® ayant un grammage de 95 g/m$^2$.

Le choix du POLYART® est préférable du fait que le PEPPART® est moins poreux ou moins opaque, de sorte que les différences d'opacité sont moins faciles à observer.

Un complexe comprenant du POLYART® choisi pour son aptitude à la compression sur une base de PEPPART® choisie pour sa résistance mécanique peut également être utilisée.

La pression appliquée peut être choisie parmi les valeurs mentionnées précédemment. Plus la pression sera élevée, plus la transparence obtenue sera élevée.

La température peut être choisie parmi les valeurs mentionnées précédemment. Toutefois, la température ne devra pas dépasser une valeur trop élevée qui risquerait de créer des déformations indésirables sur la feuille. La température peut par exemple être égale à 80°C.

On a représenté sur la figure 6, en vue de face, un détail du pseudo filigrane 1 de la figure 5.

Sur cette figure, on constate que la transparence obtenue est telle qu'elle peut permettre de voir à la fois, en transvision, les parties du pseudo filigrane 1 dues aux motifs 1a et 1b.

La figure 7 représente, en coupe, un exemple de feuille 5 selon l'invention, comportant un support 6 coextrudé. Dans cet exemple, la densification est réalisée après couchage d'un revêtement 13. En variante, la densification peut être réalisée avant couchage.

Le support 6 peut comporter, comme illustré, une couche de coeur 10 et de part et d'autre de celle-ci des couches de peau 11 et 12.

Le support 6 peut être non complètement opaque.

La couche de base 10 comporte des vides 14, lesquels peuvent résulter d'un étirage de la couche de coeur à l'extrusion, par exemple un étirage bi-axial.

Le support 6 peut être recouvert au moins partiellement, sur une face au moins, par un revêtement 13 de couchage.

Un ou plusieurs pseudo filigranes 1 sont réalisés sur la feuille 5, par exemple sur la feuille comprenant un revêtement 13, ce dernier ayant par exemple été appliqué sur l'une des couches de peau au moins afin de lui conférer des propriétés spécifiques, telles que décrites ci-après.

Par exemple, le revêtement peut comporter un liant, tel qu'un mélange de polymères d'acrylate de butyl, de styrène et d'acrylonitrile, et des charges, telles qu'un silicoaluminate et/ou de l'hydroxyde d'aluminium.

La feuille peut aussi comporter un revêtement possédant des propriétés d'antisalissure et/ou d'amélioration de la durabilité, étant par exemple tel que décrit dans la demande EP 1 319 104. Par exemple, l'une des couches de peau au moins du support peut être recouverte d'une couche transparente comprenant une silice colloïdale et un liant, par exemple un polyuréthane.

Le support et/ou la feuille peut également comporter un vernis protecteur.

Le support 6 peut être réalisé à partir d'au moins un matériau polymère, de préférence au moins une polyoléfine, par exemple un polyéthylène ou un polypropylène.

La couche de coeur 10 peut, par exemple, comporter un mélange de polyoléfine thermoplastique orientable avec au moins un résinat, notamment métallique, par exemple à base de calcium et de zinc, en une quantité de 2 à 50 % en poids par rapport au poids du mélange, la polyoléfine étant par exemple un polyéthylène haute densité. Le résinat peut comporter une phase séparée, répartie uniformément dans le polymère oléfinique, comme divulgué dans EP 470 760 A2.

La composition de la couche de coeur peut être par exemple celle donnée dans EP 0470 760 A2, à savoir (en proportions massiques):

| | |
|---|---|
| Polyéthylène (copolymer) HD | 100 |
| Resinat, notamment calcium-zinc | 5-15 |
| Polystyrène | 4.5-5.5 |
| Polyéthylène (homopolymer) HD | 17.5-21 |
| Calcium carbonate | 15-25 |
| Titanium dioxide | 5-10 |
| Styrene-butadiene copolymer | 0-1.0 |
| Calcium Oxide | 0.4-1.0 |

Le support présente par exemple la formulation suivante :

Couche de base (par exemple environ 80 μm d'épaisseur) :

| Eléments constitutifs | Parts |
|---|---|
| Copolymère HDPE | 100 |
| Homopolymère HDPE | 17,6 |
| Polystyrène | 4,8 |
| Résine de colophane | 6,0 |
| Styrène-butadiène-styrène copolymère | 0,6 |
| CaCO$_3$ | 21,0 |
| TiO$_2$ (rutile) | 5,8 |
| Agents antistatiques, antioxydants, ... | 1,4 |

Couches de peau (par exemple environ 8 μm d'épaisseur) :

| Parts | Eléments constitutifs |
|-------|----------------------|
| 100 | Copolymère HDPE |
| 9,9 | Homopolymère HDPE |
| 15 | TiO$_2$ (rutile) |
| 0,1 | Calcium stéarate |

Chaque couche de peau 11 ou 12 peut comporter une polyoléfine et une charge minérale, notamment une silice. Chaque couche de peau 11 ou 12 peut comporter de 10 à 50 % en poids par rapport au poids du mélange, de charge minérale.

Au moins l'une des couches de peau peut comporter au moins trois matériaux polymères thermoplastiques dont un polymère caoutchouteux, au moins deux des matériaux ayant au moins un certain degré d'incompatibilité.

Au moins une couche de peau peut ainsi comporter une composition comportant un polyéthylène haute densité et un polyéthylène base densité ou un copolymère de propylène et un polymère caoutchouteux. Ce dernier peut être choisi parmi les copolymères thermoplastiques de butadiène et de styrène, les copolymères d'isobutylène et d'isoprène et les terpolymères d'éthylène, de propylène et de diène.

La couche de coeur 10 peut être plus épaisse que chacune des couches de peau 11 ou 12. La couche de coeur 10 peut avoir une épaisseur supérieure à 10 μm, mieux 50 μm, encore mieux 75 μm et chaque couche de peau une épaisseur inférieure à 50 μm, mieux 15 μm, encore mieux 10 μm. Le support 6 peut avoir une épaisseur totale comprise 50 et 150 μm, de préférence entre 70 et 120 μm, par exemple.

La couche de coeur 10 comporte des vides 14, comme indiqué ci-dessus. Le taux de vides du support 6 peut être compris entre 2 et 7 %, de préférence entre 4 et 6 %, par rapport au volume total du support. Les couches de peau 11 et 12 sont de préférence dépourvues de vides débouchant à leur surface.

La détermination du taux de vides du support peut notamment se faire après coupe du support par faisceau d'ions (ions Argon par exemple), ce qui permet de limiter l'apparition de rayures, de remplissages, de déchirures ou de compressions sur le support et de préserver la morphologie du support, favorisant ainsi la détermination de la porosité.

Après avoir réalisé la coupe, l'observation peut se faire au microscope électronique, notamment à l'aide d'un microscope électronique à balayage, par exemple du type ESEM Quanta 200. Il est alors possible de distinguer les différentes couches du support, par la couche de coeur et les couches de peau, les porosités ainsi que les éventuels éléments de sécurité.

Le taux de vides peut se calculer par le ratio entre l'aire totale des vides présents sur la coupe et l'aire totale de la coupe, grâce à la formule suivante :

$$\phi = \left\langle \overline{P_s} \right\rangle = \frac{S_{vide}}{S_{coupe}}$$

La coextrusion des différentes couches du support peut se faire à une température comprise par exemple entre 150 et 250°C.

La surface du support peut être soumise à une oxydation par un traitement par décharges électriques, de type corona. Un tel traitement permet d'obtenir une surface polaire ainsi que la mouillabilité requise pour accepter facilement les encres et revêtements que le support peut être amené à recevoir ultérieurement.

La demande EP 0470 760 divulgue des procédés de fabrication d'un support pouvant convenir à l'invention.

La figure 7a représente, en coupe, un autre exemple de feuille 5 selon l'invention, comportant un support 6.

Dans cet exemple, la face 6b du support 6 est totalement recouverte par un revêtement 13 de couchage, et la face 6a du support 6 est aussi totalement recouverte par un revêtement 13 de couchage sauf dans une partie 40 de la zone rendue transparente Z. La partie non couchée 40 peut permettre de visualiser l'effet de la densification sur le support 6. En particulier, la densification permet à la zone rendue transparente Z d'apparaître plus foncée que le reste du support 6, notamment du fait d'une concentration en particules, tels que des pigments, plus élevée car l'épaisseur du support 6 est plus faible dans cette zone Z.

La feuille 5 peut comporter des éléments de sécurité 30, sur chacune de ses faces recto et verso, au niveau de la zone rendue transparente Z. Au moins un élément de sécurité 30 peut par exemple être situé au niveau de la partie non couchée 40.

## Eléments de sécurité superposés à la zone rendue transparente

Les éléments de sécurité, placés de manière repérée sur le support en superposition au moins partielle avec la zone rendue transparente, peuvent être ou non superposés l'un à l'autre.

Les éléments de sécurité peuvent correspondre à des impressions, réalisées par exemple par un procédé d'impression taille douce, offset, laser, jet d'encre, par héliogravure, sérigraphie, typographie ou micro-lithographie.

L'observation en lumière réfléchie d'une des faces du support peut ne permettre d'observer que des éléments de sécurité placés sur cette face du support.

Les éléments de sécurité peuvent être complémentaires de sorte que l'observation du support en lumière transmise peut permettre d'observer un motif formé par l'association des éléments de sécurité complémentaires.

Les éléments de sécurité sous forme d'impressions peuvent par exemple permettre d'obtenir en transvision un « effet de moiré ».

L'effet de moiré peut par exemple faire apparaître un motif produit par la superposition de deux impressions, par exemple par le rapprochement de lignes des deux impressions.

Les éléments de sécurité sous forme d'impressions peuvent encore permettre par exemple d'obtenir en transvision des « effets combinatoires ».

Un effet combinatoire résulte de l'observation en transvision d'un motif particulier qui est le résultat de la combinaison de deux motifs figurant chacune de part et d'autre du support, un premier motif peut être imprimé au recto du support et un deuxième motif peut être imprimé au verso du support. Lors de l'observation en transvision, un troisième motif peut être alors observé, résultant de la combinaison des premier et deuxième motifs.

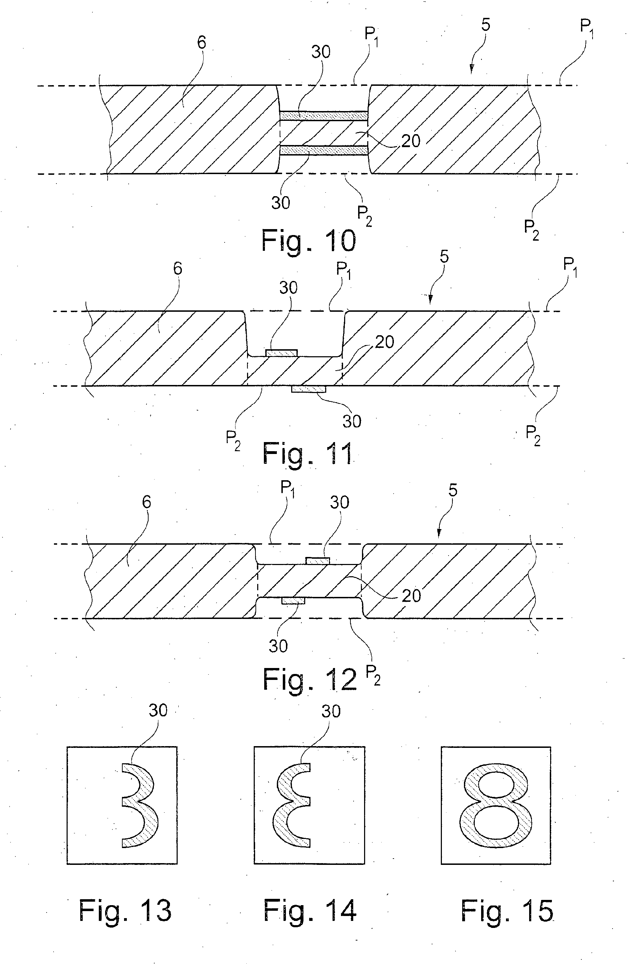

Les figures 10 à 12 représentent des exemples de feuilles 5 réalisées conformément au procédé de l'invention.

La feuille 5 représentée sur la figure 10 comporte une zone rendue transparente 20 et deux éléments de sécurité 30 superposés par exemple totalement à la zone rendue transparente. La zone rendue transparente 20 est par exemple obtenue par compression du support 6 entre une première et une deuxième formes comportant chacune des reliefs, comme décrit plus haut.

Dans l'exemple de la figure 11, la feuille 5 comporte une zone rendue transparente 20 obtenue par exemple par compression du support 6 entre une première forme comportant des reliefs et une deuxième forme dépourvue de reliefs. Les éléments de sécurité 30 et la zone rendue transparente 20 sont par exemple superposés partiellement.

Dans l'exemple de la figure 12, les éléments de sécurité 30 ne sont pas superposés l'un à l'autre.

Dans les exemples des figures 10 à 12, les éléments de sécurité 30 peuvent par exemple permettre d'observer un effet « see through » par observation de la feuille 5 en lumière transmise. En outre, les zones rendues transparentes 20 se situent entre les plans $P_1$ et $P_2$ définis respectivement par les faces recto et verso du support 6 avant densification.

Les figures 13 et 14 représentent, en vue de face, des exemples d'éléments de sécurité 30 pouvant figurer respectivement au recto et au verso de la feuille de sécurité 5 représentée à la figure 12.

En lumière réfléchie, l'observation du recto ou du verso de la feuille 5 ne permet de voir qu'une moitié du chiffre « 8 », comme on peut le voir sur les figures 13 et 14. En lumière transmise, l'observation de la feuille 5 permet de voir le chiffre « 8 » en entier, comme on peut le voir sur la figure 15, par effet « see through » entre les éléments de sécurité 30.

Le contour extérieur du chiffre « 8 » pourrait, le cas échéant, être rendu transparent à un degré plus élevé que l'intérieur du chiffre « 8 », par exemple de manière à créer un effet de relief du chiffre « 8 » lors de l'observation.

Le support peut éventuellement comporter au moins un autre élément de sécurité additionnel quelconque, différent desdits au moins deux éléments de sécurité.

**Eléments de sécurité additionnels**

L'ensemble des éléments de sécurité de premier, deuxième ou troisième niveau peut être utilisé dans le cadre de la présente invention. Au moins une couche de peau et/ou la couche de coeur et/ou le revêtement du support peut comporter au moins un tel élément de sécurité de premier, deuxième ou troisième niveau.

La couche de coeur et/ou au moins une couche de peau et/ou le revêtement peut comporter un élément de sécurité dans la masse et/ou à sa surface.

Les éléments de sécurité respectifs des couches de peau, de coeur et du revêtement peuvent être tous différents les uns des autres, ou en variante tous identiques.

La couche de coeur peut présenter une concentration en éléments de sécurité plus élevée que pour les autres couches, du fait de son éloignement de la surface.

Les éléments de sécurité peuvent être incorporés au support avant extrusion de ce dernier, de façon à être dispersés dans la masse de l'une des couches au moins du support.

La présence d'éléments de sécurité dans une feuille selon l'invention peut permettre d'obtenir des zones sensiblement opaques sans pour autant avoir à réaliser des impressions sur la feuille. Cela peut, de ce fait, constituer une alternative aux impressions classiques réalisées sur des supports plastiques selon l'art antérieur.

Au moins un élément de sécurité, par exemple sous forme de fil, peut encore être incorporé entre deux couches, par exemple entre une couche de peau et la couche de coeur.

Les deux couches de peau peuvent comporter chacune un élément de sécurité, l'élément de sécurité de la première couche de surface étant différent de l'élément de sécurité de la deuxième couche de peau.

Au moins un élément de sécurité peut être en bande ou en fil.

Au moins un élément de sécurité peut être un fil de sécurité, un foil, un patch, une planchette, un pseudo filigrane, un fil tricoté, des particules de marquage dites « taggantes », des fibres de sécurité et/ou une combinaison de tels éléments.

Comme exemples de particules de marquage, on peut notamment citer les associations suivantes :

a) pigment Altair de la société VERISMO LLC placé dans une couche favorisant l'impression, par exemple une couche de surface comportant un revêtement et,

b) pigment Datatrace DNA de la société DATATRACE placé dans la ou les couche(s) de surface,

ou

lorsque le support comporte au moins deux couches de surface,

a) pigment Spot Tag de la société BSECURE placé dans une des couches de surface et,

b) pigment Altair de la société VERISMO LLC placé dans l'autre couche de surface.

De façon générale, l'élément de sécurité peut être choisi parmi les particules de marquage suivantes :

- Spot tag de la société BSECURE,
- Datatrace DNA de la société DATATRACE,
- les poudres noires de la société MICROTAG,
- IR Regulus 93, IR Regulus 39, dérivé Lanthanide, Sirius ou Altair de la société VERISMO,
- « taggants » commercialisés par la société PAYNE SECURITY.

Les éléments de sécurité, notamment sous forme de particules de marquage, peuvent être présents dans une concentration variable au sein de la couche de coeur et/ou d'au moins une couche de peau et/ou d'un revêtement. La détection des éléments de sécurité, notamment sous forme de particules de marquage, présents dans la feuille, peut notamment dépendre de la concentration de ces éléments de sécurité mais également de la distance séparant les éléments de sécurité du dispositif de détection.

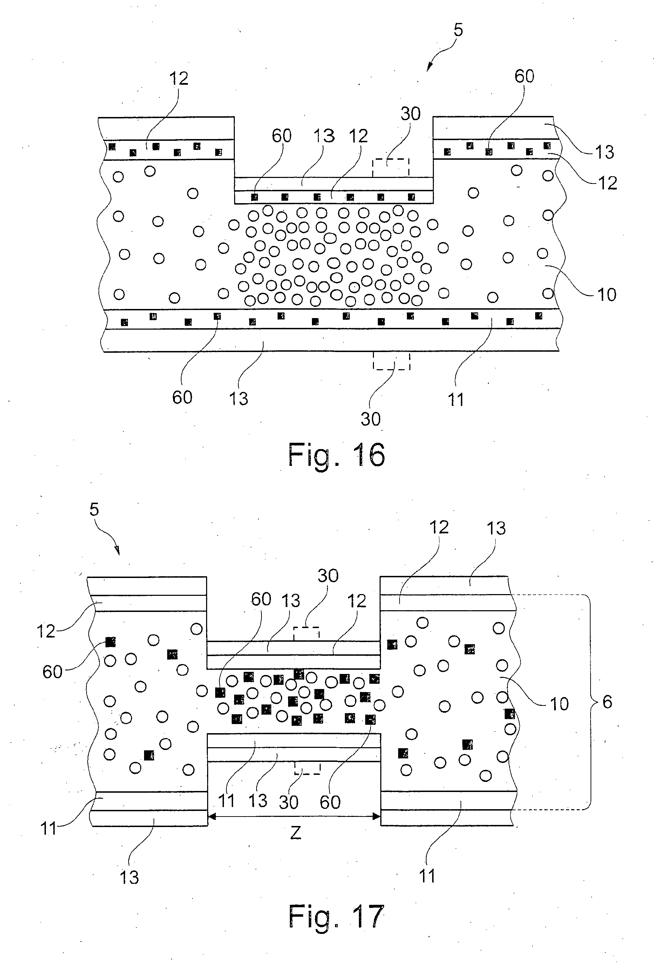

La figure 16 représente un exemple de feuille selon l'invention, dans laquelle les couches de peau 11 et 12 comportent des particules de marquage 60. La présence de particules de marquage 60 dans une couche de peau permet de rendre les particules de marquage 60 plus accessibles à un lecteur et de faciliter la détection de celles-ci. En outre, la quantité de particules de marquage nécessaire dans une couche de peau est faible, ce qui permet de limiter les coûts.

L'exemple de la figure 16 représente des particules de marquage 60 présentes dans les deux couches de peau 11 et 12, au recto et au verso de la feuille 5, ce qui peut permettre la détection des particules de marquage 60 depuis les deux faces de la feuille 5. En variante, les particules de marquage 60 peuvent être situées uniquement dans une seule couche de peau, et l'authentification de la feuille 5 peut se faire uniquement à partir de la face de la feuille 5 où figure cette couche de peau.

Dans l'exemple de la figure 16, seule une face de la feuille 5 a été densifiée, par exemple à l'aide de formes représentées aux figures 2b, 2c, 2e ou 2f. En variante, les deux faces de la feuille 5 peuvent être densifiées, comme représenté par exemple sur la figure 17.

La figure 17 représente un autre exemple de feuille 5 selon l'invention, dans laquelle les particules de marquage 60 sont incorporées dans la couche de coeur 10. En particulier, la quantité de particules de marquage 60 introduite dans la couche de coeur 10 peut être déterminée de façon à ce que la détection des particules de marquage 60 ne soit possible que dans la zone rendue transparente Z.

En effet, la densification du substrat 6 au niveau de la zone rendue transparente Z peut permettre d'augmenter localement la concentration en particules de marquage 60, de sorte que la quantité de particules de marquage 60 peut être telle que le seuil de détection de celles-ci ne soit pas atteint dans les zones non densifiées du substrat 6 (en dehors de la zone rendue transparente Z), et soit atteint dans la zone rendue transparente Z. Des particules de marquage 60 étant présentes dans la couche de coeur 10, la détection peut se faire depuis les deux faces de la feuille 5.

La feuille de sécurité 5 peut en outre, selon un mode de réalisation de l'invention, comporter des éléments de sécurité 30, situés respectivement au recto et au verso de la feuille 5, au niveau de la zone rendue transparente Z.

Dans l'exemple de la figure 17, les deux faces de la feuille 5 ont été densifiées, par exemple à l'aide de formes représentées aux figures 2a ou 2d. En variante, seule une face de la feuille 5 peut être densifiée, comme représenté par exemple sur la figure 16.

Au moins un élément de sécurité peut en outre correspondre à un élément d'authentification et/ou d'identification choisi parmi au moins l'un des éléments suivants : un élément de mise en évidence d'une falsification, notamment visible et/ou détectable à l'aide d'un dispositif spécifique de détection, un élément à effet optique variable, interférentiel et/ou diffractif, holographique, iridescent ou à cristaux liquides, un revêtement magnétique ou cristallin, des fibres magnétiques, des traceurs détectables par résonance magnétique, des traceurs détectables par fluorescence X, des biomarqueurs, un vernis ou une encre, des traceurs luminescents, fluorescents ou phosphorescents, des composés photochromiques, thermochromiques, électroluminescents et/ou piezochromiques et/ou qui changent de couleur au contact d'un ou de plusieurs produits chimiques ou biochimiques prédéterminés, les dispositifs électroniques, notamment RFID.

Au moins un élément de sécurité peut être choisi parmi les fibres et/ou les encres et/ou les pigments luminescents, par exemple uniquement visibles sous un rayonnement UV ou laser, et/ou iridescents, les fibres magnétiques et/ou métalliques et leurs mélanges. De préférence, un tel élément de sécurité sera présent dans la masse de la couche de base et/ou dans la masse d'une couche de surface et/ou d'un revêtement.

Au moins un élément de sécurité peut être un élément thermochrome, piézochrome ou photochrome.

Au moins un élément de sécurité peut être une particule luminescente, en particulier fluorescente.

Au moins un élément de sécurité peut être une particule de marquage contenant un fragment d'ADN.

La feuille peut comporter tous types d'éléments de sécurité, en surface notamment.

Au moins un élément de sécurité peut être un film métallique partiellement démétallisé et/ou présentant des effets visuels, par exemple holographiques, situé à la surface du support.

Au moins un élément de sécurité peut être une couche métallique située à la surface d'au moins une partie du support. En particulier, la couche de métal peut être partiellement recouverte d'une couche opaque, afin de former des motifs.

Au moins un élément de sécurité peut être un motif formé de zones plus translucides que le support et apparaissant comme un filigrane, réalisé par exemple selon la méthode décrite dans la demande de brevet EP 1 518 661.

Au moins un élément de sécurité peut être un élément plat en un matériau spécifique qui collecte la lumière (« guide d'onde ») situé à la surface du support. De tels matériaux collecteurs de lumière luminescents pouvant convenir sont, par exemple, des films polymères à base de polycarbonate, appelés LISA et commercialisés par la société BAYER.

De préférence l'élément plat, réalisé en un matériau spécifique qui collecte la lumière, comporte des motifs gravés, embossés ou imprimés, notamment en négatif en surface, permettant d'observer la luminescence au moins au niveau des motifs.

## Exemples proposés

### Exemple 1

On fait référence aux exemples 1 à 4 décrits dans EP 0 470 760 A2. Les feuilles correspondantes sont comprimées à chaud, dans une presse telle que représentée à la figure 2, pour former un pseudo filigrane. On obtient alors une feuille comprenant une zone densifiée telle que représentée aux figures 3 à 6.

### Exemple 2

Une feuille POLYART® HS 90 ou POLYART® HS 115, de la société ARJOBEX, comprenant une couche centrale poreuse et deux couches de peau est réalisée. Le pigment Datatrace DNA de la société DATATRACE est incorporé dans le mélange maître des couches de peau. Un revêtement favorisant l'impression est déposé des deux côtés du support. Dans le revêtement de la première face, le pigment Altaïr de la société VERISMO LLC a été préalablement introduit. Dans le revêtement de la seconde face, des fibres fluorescentes ainsi que des hilites ont été introduites.

Une impression au repère de deux motifs complémentaires représentés sur les figures 13 et 14 est réalisée sur une zone définie du support POLYART® couché.

Sur ladite zone définie, la base est densifiée par mise en contact de deux formes en relief à une pression de 250 bars et une température de 70°C. On obtient une zone densifiée telle que représentée sur les figures 3 à 6.

Selon une variante l'impression peut être réalisée après densification.

Bien entendu, l'invention n'est pas limitée aux exemples de mise en oeuvre qui viennent d'être décrits.

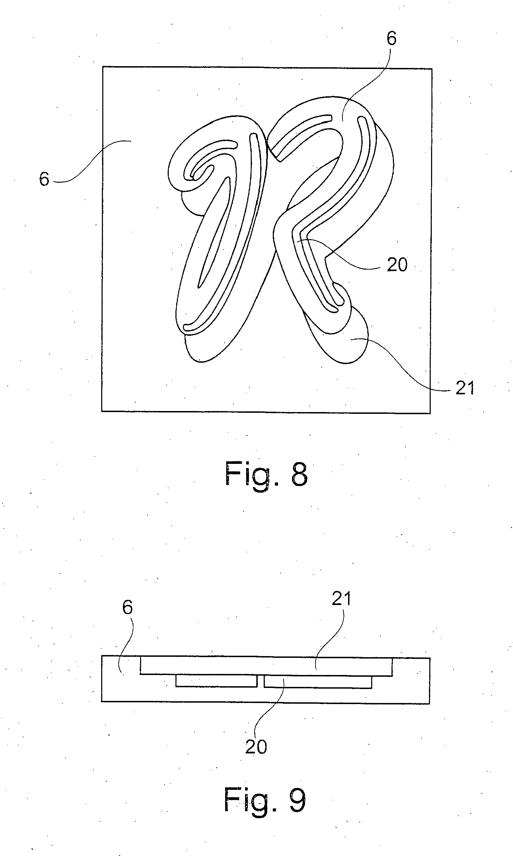

En particulier, la réalisation d'un pseudo filigrane par compression comme cela vient d'être décrit peut être combinée à la réalisation d'un pseudo filigrane par embossage, comme illustré sur les figures 8 et 9.

Sur la figure 8, les zones rendues transparentes 20 et 21 pourraient également être densifiées à des degrés différents et le support pourrait comporter au niveau des zones 20 et 21 une impression sous-jacente (du type « see-through » par exemple), permettant d'observer différemment l'impression en fonction du degré de transparentisation des zones 20 et 21.

Sur celles-ci, le support 6 comporte outre la première zone 21 rendue transparente réalisée par compression du support 6 comme décrit précédemment, une deuxième zone 20 rendue transparente par embossage du support 6. Deux éléments de sécurité peuvent recouvrir au moins partiellement les zones 20 et 21 sur le recto et le verso du substrat 6.

Dans les exemples qui précèdent, le support 6 peut être coloré. De la sorte, il est possible de faire apparaître une couleur plus foncée dans la zone rendue transparente, observée par exemple au niveau d'une partie 40 de la zone rendue transparente lorsque le support est couché par exemple.

L'expression « comportant un » doit être comprise comme étant synonyme de « comportant au moins un », sauf si le contraire est spécifié.

## Revendications

1. Procédé de fabrication d'une feuille (5) comportant un support (6), notamment au moins partiellement opaque et/ou translucide, réalisé à partir d'au moins un matériau polymère, comportant l'étape consistant à densifier au moins une zone du support (6) de manière à faire apparaître un effet filigrané multiton présentant différents degrés de zones claires et sombres, la densification du support étant obtenue par une compression dans laquelle le support est comprimé entre une première forme (3) comportant un premier motif en relief (1a) et une deuxième forme (4) comportant ou non un deuxième motif en relief (1b), au moins l'une des première (3) et deuxième (4) formes comportant des reliefs de hauteur variable pour former l'effet filigrané multiton, le support (6) étant coextrudé, réalisé à partir d'au moins un matériau polymère comportant une couche de coeur (10) et au moins une couche de peau (11, 12), la couche de coeur comportant des vides (14).

**2.** Procédé selon la revendication 1, ladite au moins une zone du support (6) étant densifiée selon une trame.

**3.** Procédé selon la revendication 1 ou 2, comportant les étapes successives consistant à :

a) densifier par compression au moins une zone du support (6) de manière à former au moins une zone rendue transparente (20),
b) munir le support (6) d'au moins deux éléments de sécurité (30) respectivement au recto et au verso du support, lesdits au moins deux éléments de sécurité (30) étant superposés chacun au moins partiellement à ladite au moins une zone rendue transparente (20) et étant placés de manière repérée l'un par rapport à l'autre.

**4.** Procédé selon la revendication 3, ladite au moins une zone rendue transparente (20) étant entièrement située entre les plans ($P_1$, $P_2$) définis respectivement par les faces recto et verso du support (6) avant densification.

**5.** Procédé selon la revendication 3 ou 4, la densification du support (6) étant réalisée à différents degrés de manière à obtenir différents niveaux de transparence sur la zone rendue transparente (20).

**6.** Procédé selon l'une quelconque des revendications 3 à 5, comportant en outre l'étape consistant à réaliser une densification dans une zone non superposée aux éléments de sécurité, par exemple par embossage.

**7.** Procédé selon l'une quelconque des revendications 3 à 6, les éléments de sécurité (30) étant des impressions.

**8.** Procédé selon l'une quelconque des revendications précédentes, le support (6) étant non couché après densification.

**9.** Procédé selon l'une quelconque des revendications 1 à 7, le support (6) étant couché avant densification.

**10.** Procédé selon l'une des revendications précédentes, le support (6) étant coextrudé, réalisé à partir d'au moins un matériau polymère comportant une couche de coeur (10) et au moins une couche de peau (11, 12), la couche de coeur comportant des vides (14), et le procédé comportant avant l'étape a), l'étape consistant à étirer le support (6), notamment biaxialement.

**11.** Procédé selon la revendication précédente, au moins une couche de peau (11, 12) et/ou la couche de coeur (10) comportant des particules de marquage (60).

**12.** Procédé selon l'une quelconque des revendications précédentes, le support (6), notamment la couche de coeur (10) du support dans le cas d'un support coextrudé, étant colorée et/ou comportant un agent luminescent.

**13.** Procédé selon l'une quelconque des revendications précédentes, les première (3) et deuxième (4) formes comportant respectivement des premier (1a) et deuxième (1b) motifs, le premier motif (1a) ayant des reliefs de hauteur variable.

**14.** Article comportant une feuille obtenue par le procédé selon l'une quelconque des revendications précédentes, cet article étant choisi parmi: un document d'identité, un moyen de paiement tel qu'un chèque ou un billet de banque, une carte d'identité, une feuille ou un livret de passeport, un visa, un coupon, une étiquette de protection et/ou d'authentification, une étiquette de traçabilité, un papier tête de lettre ou à visée publicitaire, entre autres.

**Patentansprüche**

**1.** Verfahren zur Herstellung eines Blattes (5), das einen Träger (6) aufweist, der insbesondere wenigstens teilweise undurchsichtig und/oder durchscheinend ist und aus wenigstens einem Polymermaterial hergestellt ist, den Schritt umfassend, der darin besteht, wenigstens einen Bereich des Trägers (6) so zu verdichten, dass das Auftreten eines Mehrton-Wasserzeicheneffekts bewirkt wird, der verschiedene Grade von hellen und dunklen Bereichen aufweist, wobei die Verdichtung des Trägers durch eine Kompression erreicht wird, bei welcher der Träger zwischen einer ersten Form (3), die ein erstes Reliefmuster (1a) aufweist, und einer zweiten Form (4), die ein zweites Reliefmuster (1b) aufweist oder nicht, komprimiert wird, wobei die erste (3) und die zweite (4) Form Reliefs von variabler Höhe aufweisen, um den Mehrton-Wasserzeicheneffekt zu bewirken, wobei der Träger (6) koextrudiert ist, hergestellt aus wenigstens einem Polymermaterial, das eine Kernschicht (10) und wenigstens eine Außenhautschicht (11, 12) aufweist, wobei die Kernschicht Hohlräume (14) aufweist.

**2.** Verfahren nach Anspruch 1, wobei der wenigstens eine Bereich des Trägers (6) in einem Raster ver-

**3.** Verfahren nach Anspruch 1 oder 2, welches die folgenden aufeinander folgenden Schritte umfasst:

a) Verdichten wenigstens eines Bereichs des Trägers (6) durch Kompression, um so wenigstens einen durchsichtig gemachten Bereich (20) auszubilden,

b) Ausstatten des Trägers (6) mit wenigstens zwei Sicherheitselementen (30) auf der Rückseite bzw. auf der Vorderseite des Trägers, wobei die wenigstens zwei Sicherheitselemente (30) jeweils wenigstens teilweise dem wenigstens einen durchsichtig gemachten Bereich (20) überlagert werden und registerhaltig zueinander angeordnet werden.

**4.** Verfahren nach Anspruch 3, wobei sich der wenigstens eine durchsichtig gemachte Bereich (20) vollständig zwischen den Ebenen ($P_1$, $P_2$) befindet, die durch die Vorderseite bzw. die Rückseite des Trägers (6) vor der Verdichtung definiert sind.

**5.** Verfahren nach Anspruch 3 oder 4, wobei die Verdichtung des Trägers (6) mit verschiedenen Graden durchgeführt wird, um so unterschiedliche Niveaus der Durchsichtigkeit auf dem durchsichtig gemachten Bereich (20) zu erhalten.

**6.** Verfahren nach einem der Ansprüche 3 bis 5, welches außerdem den Schritt des Durchführens einer Verdichtung in einem Bereich umfasst, der nicht den Sicherheitselementen überlagert ist, zum Beispiel durch Prägen.

**7.** Verfahren nach einem der Ansprüche 3 bis 6, wobei die Sicherheitselemente (30) Aufdrucke sind.

**8.** Verfahren nach einem der vorhergehenden Ansprüche, wobei der Träger (6) nach der Verdichtung unbeschichtet ist.

**9.** Verfahren nach einem der Ansprüche 1 bis 7, wobei der Träger (6) vor der Verdichtung beschichtet ist.

**10.** Verfahren nach einem der vorhergehenden Ansprüche, wobei der Träger (6) koextrudiert ist, hergestellt aus wenigstens einem Polymermaterial, das eine Kernschicht (10) und wenigstens eine Außenhautschicht (11, 12) aufweist, wobei die Kernschicht Hohlräume (14) aufweist, und wobei das Verfahren vor dem Schritt a) den Schritt des Dehnens, insbesondere biaxialen Dehnens, des Trägers (6) umfasst.

**11.** Verfahren nach dem vorhergehenden Anspruch, wobei wenigstens eine Außenhautschicht (11, 12) und/oder die Kernschicht (10) Markierungsteilchen (60) aufweist.

**12.** Verfahren nach einem der vorhergehenden Ansprüche, wobei der Träger (6), insbesondere die Kernschicht (10) des Trägers im Falle eines koextrudierten Trägers, gefärbt ist und/oder ein Lumineszenzmittel aufweist.

**13.** Verfahren nach einem der vorhergehenden Ansprüche, wobei die erste (3) und die zweite (4) Form ein erstes (1a) bzw. zweites (1b) Muster aufweisen, wobei das erste Muster (1a) Reliefs von variabler Höhe aufweist.

**14.** Artikel, welcher ein Blatt aufweist, das durch das Verfahren nach einem der vorhergehenden Ansprüche erhalten wurde, wobei dieser Artikel ausgewählt ist aus: einem Ausweisdokument, einem Zahlungsmittel wie etwa einem Scheck oder einer Banknote, einem Personalausweis, einer Passseite oder einem Pass, einem Visum, einem Kupon, einem Schutz- und/oder Authentifizierungsetikett, einem Rückverfolgungsetikett, einem Briefkopf- oder Werbepapier und anderem.

**Claims**

**1.** Method for manufacturing a sheet (5) comprising a support (6), in particular at least partially opaque and/or translucent, made from at least one polymeric material, comprising the step consisting in compacting at least one zone of the support (6) so as to cause the appearance of a multitone watermarked effect exhibiting different degrees of light and dark zones, the compaction of the support being obtained by a compression in which the support is compressed between a first mould (3) comprising a first raised motif (1a) and a second mould (4) comprising or not comprising a second raised motif (1b), at least one of the first (3) and second (4) moulds having raised areas of variable height in order to form the multitone watermarked effect, the support (6) being coextruded, made from at least one polymeric material comprising a core layer (10) and at least one skin layer (11, 12), the core layer comprising voids (14).

**2.** Method according to Claim 1, said at least one zone of the support (6) being compacted in accordance with a raster.

**3.** Method according to Claim 1 or 2, comprising the successive steps consisting in:

a) compacting by compression at least one zone of the support (6) so as to form at least one zone made transparent (20),

b) providing the support (6) with at least two security elements (30) respectively at the front and the back of the support, said at least two security elements (30) being superposed each at least partially onto said at least one zone made transparent (20) and being positioned such that one is located relative to the other.

4. Method according to Claim 3, said at least one zone made transparent (20) being entirely situated between the planes ($P_1$, $P_2$) respectively defined by the front and back faces of the support (6) before compaction.

5. Method according to Claim 3 or 4, the compaction of the support (6) being effected to differing extents so as to obtain different levels of transparency over the zone made transparent (20).

6. Method according to any one of Claims 3 to 5, further comprising the step consisting in effecting a compaction in a zone not superposed onto the security elements, for example by embossing.

7. Method according to any one of Claims 3 to 6, the security elements (30) being imprints.

8. Method according to any one of the preceding claims, the support (6) being not coated after compaction.

9. Method according to any one of Claims 1 to 7, the support (6) being coated before compaction.

10. Method according to one of the preceding claims, the support (6) being coextruded, made from at least one polymeric material comprising a core layer (10) and at least one skin layer (11, 12), the core layer comprising voids (14), and the method comprising, before the step a), the step consisting in stretching the support (6), in particular biaxially.

11. Method according to the preceding claim, at least one skin layer (11, 12) and/or the core layer (10) comprising marking particles (60).

12. Method according to any one of the preceding claims, the support (6), in particular the core layer (10) of the support in the case of a coextruded support, being coloured and/or comprising a luminescent agent.

13. Method according to any one of the preceding claims, the first (3) and second (4) moulds respectively comprising first (1a) and second (1b) motifs, the first motif (1a) having raised areas of variable height.

14. Article comprising a sheet obtained by the method according to any one of the preceding claims, this article being selected from: an identity document, a means of payment such as a cheque or a bank note, an identity card, a passport page or booklet, a visa, a ticket, a protective and/or authenticating label, a traceability label, headed paper or paper for advertising purposes, inter alia.

Fig. 1

Fig. 2a

Fig. 3

Fig. 4

Fig. 5

Fig. 6

Fig. 7

Fig. 2b

Fig. 2c

Fig. 2d

Fig. 2e

Fig. 2f

Fig. 8

Fig. 9

Fig. 10

Fig. 11

Fig. 12

Fig. 13

Fig. 14

Fig. 15

Fig. 1a    Fig. 1c

Fig. 1b    Fig. 1d

Fig. 7a

Fig. 16

Fig. 17

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2338680 A
- WO 2008116796 A
- US 20070026204 A
- US 20070178295 A
- EP 0655316 A
- US 5536468 A

- CA 2505586
- EP 1319104 A
- EP 470760 A2
- EP 0470760 A2
- EP 0470760 A
- EP 1518661 A